# EUROPÄISCHE PATENTANMELDUNG

(11) **EP 4 403 599 A2**
(43) Veröffentlichungstag der Anmeldung: **24.07.2024**
(21) Anmeldenummer: 23205699.4
(22) Anmeldetag: 25.10.2023
(51) Int. Cl.: C08J 9/40, C08J 9/42, B29C 44/56

(54) **IMPRÄGNIERTER SCHAUMSTOFF**

(71) Anmelder: Hanno-Werk GmbH & Co. KG, 30880 Laatzen (DE)
(72) Erfinder: Hohlfeld, Andreas, 31832 Springe (DE); Koplin, Tobias, 30163 Hannover (DE)
(74) Vertreter: Patentanwälte Thömen & Körner

(57) **Zusammenfassung**

Die Erfindung betrifft ein Erzeugnis, vorzugsweise ein Fugendichtungsband, umfassend einen Schaumstoff oder Schaumstoffabschnitt, der zumindest teilweise mit einer Imprägniermasse imprägniert ist.

## Beschreibung

Die Erfindung betrifft ein Erzeugnis, vorzugsweise ein Fugendichtungsband, das einen Schaumstoff oder einen Schaumstoffabschnitt umfasst, der zumindest teilweise mit einer Imprägniermasse, imprägniert ist.

Erzeugnisse in Form von Fugendichtungsbänder, die einen Schaumstoff, insbesondere einen Polyurethanschaumstoff, aufweisen, sind zum Abdichten insbesondere gegen Luftzug und Schlagregen beispielsweise aus der DE 19641415 C2, der DE 20009674 U1 oder der WO 2012/167762 A1 bekannt und werden in der Bautechnik zum Abdichten insbesondere von Bauteilen, beispielsweise von Fenster- und Türrahmen, gegenüber einem Mauerwerk, beispielsweise einer Gebäudewandöffnung, oder einer Bewegungsfuge in einer Fassade verwendet. Vorgenannte Fugendichtungsbänder weisen wenigstens eine Membranschicht auf. Weitere Fugendichtungsbänder, die keine Membranschicht aufweisen, sind beispielsweise aus der DE 1 000 946 A, DE 40 20 230 A1 oder der DE 34 07 995 A1 bekannt.

Ausgehend von diesem Stand der Technik liegt der Erfindung die Aufgabe zugrunde, ein nachhaltigeres Erzeugnis, vorzugsweise ein Fugendichtungsband, das einen Schaumstoff oder einen Schaumstoffabschnitt umfasst, der zumindest teilweise mit einer Imprägniermasse imprägniert ist, bereitzustellen.

Diese Aufgabe wird bei einem Erzeugnis, vorzugsweise einem Fugendichtungsband, das einen Schaumstoff oder einen Schaumstoffabschnitt umfasst, der zumindest teilweise mit einer Imprägniermasse imprägniert ist, durch die Merkmale des Anspruchs 1 gelöst. Weiterbildungen und vorteilhafte Ausgestaltungen der Erfindung ergeben sich aus der nachfolgenden Beschreibung und den Unteransprüchen.

Das erfindungsgemäße Erzeugnis, vorzugsweise Fugendichtungsband, umfasst einen Schaumstoff oder Schaumstoffabschnitt, der zumindest teilweise mit einer Imprägniermasse imprägniert ist, wobei die Imprägniermasse eine oder mehr als eine Komponente aufweist, die eine Hydrophobierung des Schaumstoffs oder des Schaumstoffabschnitts bewirkt, wobei die Imprägniermasse erfindungsgemäß jedoch keine per- und polyfluorierten Alkylverbindungen aufweist.

Durch den Verzicht auf per- und polyfluorierte Alkylverbindungen, so genannte PFAS, wird ein nachhaltigeres Erzeugnis bereitgestellt, bei dem bei einer späteren Entsorgung des Erzeugnisses solche langlebigen Verbindungen keinesfalls mehr in die Umwelt gelangen. Allgemein handelt es sich bei per- und polyfluorierten Alkylverbindungen um persistente Verbindungen, die sich in Organismen anreichern und für diese sehr schädlich sein können.

Es kann von Vorteil sein, wenn eine oder mehr als eine die Hydrophobierung bewirkende Komponente aus hydrophoben oder hydrophob modifizierten Mikropartikeln und/oder vorzugsweise aus hydrophoben oder hydrophob modifizierten Nanopartikeln besteht.

Es kann von Vorteil sein, wenn eine oder mehr als eine die Hydrophobierung bewirkende Komponente in der Imprägniermasse emulgiert, dispergiert oder gelöst ist.

Es kann von Vorteil sein, wenn eine oder mehr als eine die Hydrophobierung bewirkende Komponente ein hydrophobes oder hydrophob modifiziertes Siliconharz ist.

Es kann von Vorteil sein, wenn eine oder mehr als eine die Hydrophobierung bewirkende Komponente ein hydrophobes oder hydrophob modifiziertes Siloxan, insbesondere Polysiloxan, z. B. Methylpolysiloxan, ist.

Es kann von Vorteil sein, wenn eine oder mehr als eine die Hydrophobierung bewirkende Komponente eine hydrophobe oder hydrophob modifizierte Kieselsäure, insbesondere eine hydrophobe oder hydrophob modifizierte pyrogene Kieselsäure, ist.

Es kann von Vorteil sein, wenn eine oder mehr als eine die Hydrophobierung bewirkende Komponente ein hydrophobes oder hydrophob modifiziertes Kieselgel ist.

Es kann von Vorteil sein, wenn eine oder mehr als eine die Hydrophobierung bewirkende Komponente ein hydrophobes oder hydrophob modifiziertes Silikat, insbesondere Alkalisilikat, ist.

Es kann von Vorteil sein, wenn eine oder mehr als eine die Hydrophobierung bewirkende Komponente ein hydrophob modifiziertes Metalloxid ist.

Es kann von Vorteil sein, wenn eine oder mehr als eine die Hydrophobierung bewirkende Komponente ein hydrophobes oder hydrophob modifiziertes Silikonat, insbesondere ein Alkalimethylsilikonat oder vorzugsweise ein Alkalipropylsilikonat, ist.

Es kann von Vorteil sein, wenn eine oder mehr als eine die Hydrophobierung bewirkende Komponente ein hydrophobes oder hydrophob modifiziertes Silan ist.

Es kann von Vorteil sein, wenn eine oder mehr als eine die Hydrophobierung bewirkende Komponente ein hydrophobes oder hydrophob modifiziertes Polymer, vorzugsweise ein Acrylatpolymer oder Polymethylharnstoff, ist.

Es kann von Vorteil sein, wenn eine oder mehr als eine die Hydrophobierung bewirkende Komponente aus Aerogel-Partikeln oder Kunststoffpartikeln besteht, wobei der Kunststoff Polyethylen, Polypropylen, Ethylenvinylacetat, Polyvinylacetat oder Polystyrol, insbesondere expandiertes Polystyrol, ist.

Es kann von Vorteil sein, wenn eine oder mehr als eine die Hydrophobierung bewirkende Komponente Polypropylenglykol oder Polyethylenglykol ist.

Es kann von Vorteil sein, wenn eine oder mehr als eine die Hydrophobierung bewirkende Komponente Asphalt, Bitumen, Teer, Pech, ein Paraffin oder ein Wachs ist.

Es kann von Vorteil sein, wenn eine oder mehr als eine die Hydrophobierung bewirkende Komponente eine hydrophob modifizierte Metallverbindung, vorzugsweise Calcium-Stearat, ist.

Es kann von Vorteil sein, wenn die eine Hydrophobierung bewirkenden Komponente mit einem Anteil von 3 - 20 Gew.-% bezogen auf die Trockenmasse des Imprägnats enthalten sind.

Es kann von Vorteil sein, wenn eine der eine Hydrophobierung bewirkenden Komponente gleichzeitig als Bindemittel fungiert und weitere Bestandteilteile der Imprägniermasse, insbesondere Pigmente, Füllstoffe oder andere nicht polymere Komponenten, in dessen Matrix bindet.

Es kann von Vorteil sein, wenn wenigstens eine der eine Hydrophobierung bewirkenden Komponenten eine Kohäsivität aufweist, die eine verzögerte Rückstellung des imprägnierten und komprimierten Schaumstoffs oder Schaumstoffabschnitts ermöglicht.

Es kann von Vorteil sein, wenn wenigstens eine der eine Hydrophobierung bewirkenden Komponenten so beschaffen ist, dass diese eine Verbindung zum Schaumstoff eingeht und so die übrigen Komponenten an diesen bindet.

Es kann von Vorteil sein, wenn wenigstens eine der eine Hydrophobierung bewirkenden Komponenten derart an Pigemente, Füllstoffe und/oder weitere hydrophile Bestandteile bindet, dass diese abgeschirmt werden, wodurch eine hydrophobe Hülle um diese herum entsteht.

Es kann von Vorteil sein, wenn wenigstens eine Komponente der Imprägniermasse zumindest teilweise auf Basis wenigstens eines nachwachsenden Rohstoffs und/oder zumindest teilweise auf Basis wenigstens eines Rezyklats und/oder zumindest teilweise auf Basis eines zumindest teilweise aus CO₂ hergestellten Polyols produziert ist.

Dadurch wird ein nachhaltigeres Erzeugnis bereitgestellt, wobei sich eine verbesserte CO₂-Bilanz ergibt. Die CO₂-Bilanz eines Produktes, auch CO₂-Fußabdruck eines Produktes genannt, wird in einem Memorandum mit dem Titel "Product Carbon Footprint" des Bundesministeriums für Umwelt, Naturschutz und Reaktorsicherheit, des Umweltbundesamts und des Öko-Instituts e.V. (Dezember 2009) als "Bilanz der Treibhausgasemissionen entlang des gesamten Lebenszyklus eines Produkts in einer definierten Anwendung und bezogen auf eine definierte Nutzeinheit" definiert. Der Lebenszyklus eines Produkts umfasst dabei die gesamte Wertschöpfungskette von Herstellung und Transport der Rohstoffe und Vorprodukte über Produktion und Distribution bis hin zu Nutzung, Nachnutzung und Entsorgung.

So kann es vorteilhaft sein, wenn die Imprägniermasse ein Bindemittel auf Polyurethanbasis umfasst, wobei das Polyurethan unter Verwendung von Polyolen hergestellt ist, die wiederum zumindest teilweise aus CO₂ hergestellt sind. Es kann auch von Vorteil sein, wenn das Polyurethan zumindest teilweise auf Basis wenigstens eines Rezyklats hergestellt ist.

Erfindungsgemäße Erzeugnisse lassen sich vielfältig einsetzen, vorzugsweise für die Fugenabdichtung im Hochbau, insbesondere zur Abdichtung von Fassadenfugen, Fenster- oder Tür-Anschlussfugen, oder für Brandschutzabschottungen. Ein weiterer Einsatzbereich sind vorzugsweise Anschlussfugen im Tiefbau, insbesondere Dehnungsfugen in Fahrbahnen und Parkhäusern oder dergleichen. Ein anderer Einsatzbereich betrifft vorzugsweise den Maschinenbau, insbesondere die Schalldämmung oder die Schalldämpfung, oder den Fahrzeugbau, insbesondere Automobile, Busse oder Schienenfahrzeuge.

Dem Fachmann sind verschiedene Verfahren zum Imprägnieren eines Schaumstoffs oder Schaumstoffabschnitts mit einer Imprägniermasse bekannt. Üblicherweise dient die Imprägnierung dazu, den Schaumstoff oder das nachfolgend beschriebene Schaumstoff umfassende Fugendichtungsband mit einem verzögerten Rückstellverhalten auszubilden. Zusätzlich oder alternativ kann der Schaumstoff oder der Schaumstoffabschnitt oder das den Schaumstoff oder den Schaumstoffabschnitt aufweisende Fugendichtungsband durch das Imprägnieren mit einer Imprägniermasse mit weiteren Funktionalitäten, insbesondere einer wasserabweisenden Wirkung, einer Luftdichtheit, einem Flammschutz, einer Farbe oder einem UV-Schutz, ausgerüstet werden.

Es kann vorteilhaft sein, wenn der Schaumstoff oder Schaumstoffabschnitt aus Polyurethanschaumstoff, vorzugsweise aus Polyurethanweichschaumstoff, besteht.

Es kann vorteilhaft sein, wenn der Schaumstoff imprägniert ein Trockenraumgewicht von 30 bis 150 kg/m³ aufweist.

Es kann vorteilhaft sein, wenn der imprägnierte, nicht komprimierte Schaumstoff eine Stauchhärte (CV40)von 2 bis 10 kPa, bestimmt gemäß DIN EN ISO 3386, aufweist.

Es kann vorteilhaft sein, wenn der imprägnierte, nicht komprimierte Schaumstoff eine Luftdurchlässigkeit von 500 bis 1500 l/m²s, bestimmt gemäß DIN EN ISO 9237 bei einer Schaumdicke des Prüfkörpers von 10 mm, einer Prüffläche des Schaumkörpers von 20 cm² und bei einem Prüfdruck von 100 Pa als Prüfbedingungen, aufweist.

Es kann vorteilhaft sein, wenn der imprägnierte, nicht komprimierte Schaumstoff eine Luftdurchlässigkeit von 100 bis 400 l/dm²min, bestimmt gemäß DIN EN ISO 7231 Verfahren A bei einer Rohschaumdicke des Prüfkörpers von 50 mm, einer Prüffläche des Schaumkörper von 100 cm² und bei einem Prüfdruck von 100 Pa als Prüfbedingungen, aufweist.

Es kann vorteilhaft sein, wenn der imprägnierte, nicht komprimierte Schaumstoff eine Zugfestigkeit von 50 bis 400 kPa, bestimmt gemäß DIN EN ISO 1798, aufweist.

Es kann vorteilhaft sein, wenn der imprägnierte, nicht komprimierte Schaumstoff eine Bruchdehnung von 50 bis 400 %, bestimmt gemäß DIN EN ISO 1798, aufweist.

Es kann vorteilhaft sein, wenn der imprägnierte Schaumstoff einen Druckverformungsrest von 0 bis 20 %, vorzugsweise von ≤ 10 %, bestimmt gemäß DIN EN ISO 1856-Verfahren C bei 70 °C, 50 % und 22 Stunden als Prüfbedingungen, aufweist.

Durch das Imprägnieren wird das Raumgewicht des imprägnierten Schaumstoffs nach seiner Trocknung im Vergleich zu einem nicht imprägnierten Rohschaumstoff erhöht. Vorzugsweise wird das Raumgewicht des imprägnierten Schaumstoffs nach seiner Trocknung im Vergleich zum nicht imprägnierten Rohschaumstoff um 50 % - 600 % erhöht, besonders bevorzugt um 100 % - 300%.

Üblicherweise wird der Rohschaumstoff mit einer Imprägniermasse getränkt, indem der Rohschaumstoff in die Imprägniermasse eingetaucht wird, so dass die Imprägniermasse, bevorzugt mit Hilfe von Tauch- oder Quetschwalzen, in die Poren des Schaumstoffs eindringt und diesen vollständig durchdringt. Die Imprägniermasse füllt also die Poren des Schaumstoffs aus. Vorzugsweise wird hierzu ein offenzelliger oder teilweise geschlossenzelliger oder offenzelliger Schaumstoff verwendet. Nach dem Imprägnieren wird der Schaumstoff mittels mindestens einer Walze, insbesondere mit einem Walzenpaar, gewalzt. Mittels der wenigstens einen Walze wird ein Teil der Imprägniermasse aus dem Schaumstoffkörper bis zum gewünschten Imprägnierungsgrad aus- bzw. abgequetscht. Durch Variation des Walzendruckes kann der Imprägnierungsgrad, das heißt die Menge der vom Schaumstoff aufgenommenen Imprägniermasse, variiert werden. Anschließend wird der Schaumstoff getrocknet, komprimiert, zu einer komprimierten Rolle aufgewickelt und geschnitten.

Es ist auch möglich, den Schaumstoff unter Druck bzw. im Vakuum, mittels Injektionsnadeln oder mit Hilfe einer Sprüheinrichtung zu imprägnieren bzw. zu beschichten.

Es kann vorteilhaft sein, wenn das Fugendichtungsband zwei Längsseiten sowie eine im Einbauzustand des Fugendichtungsbandes an die eine Fugenflanke angrenzende Oberseite und eine im Einbauzustand des Fugendichtungsbandes an die gegenüberliegende Fugenflanke angrenzende Unterseite aufweist. Die Breite des Fugendichtungsbandes ist somit der Abstand zwischen zwei Längsseiten.

Es kann vorteilhaft sein, wenn das Fugendichtungsband eine oder mehrere Membranschichten aufweist.

Es kann vorteilhaft sein, wenn zumindest eine Membranschicht feuchtevariabel ist.

Es kann vorteilhaft sein, wenn zumindest eine Membranschicht in Längsrichtung zumindest teilweise zwischen Oberseite und Unterseite des Fugendichtungsbandes, vorzugsweise zwischen zwei Abschnitten aus Schaumstoff, verläuft, vorzugsweise derart, dass diese im Einbauzustand des Fugendichtungsbandes von einem sich in der Fuge ausbildenden Wasserdampfdiffusionsstrom zumindest größtenteils durchströmbar ist, diese also entsprechend quer zur Diffusionsrichtung angeordnet ist.

Für bestimmte Einsatzzwecke kann es vorteilhaft sein, wenn alle Schaumstoffabschnitte des Fugendichtungsbandes den gleichen Schaumstoff, also einen Polyurethanschaumstoff auf Basis wenigstens eines nachwachsenden Rohstoffs und/oder zumindest teilweise auf Basis eines zumindest teilweise aus CO₂ hergestellten Polyols oder eines Rezyklats produziert ist, aufweisen. Es kann vorteilhaft sein, wenn in diesem Fall die den Schaumstoff aufweisenden Abschnitte zumindest teilweise eine gleiche oder eine unterschiedliche Höhe aufweisen. Auch kann es vorteilhaft sein, wenn die Schaumstoffabschnitte eine gleiche oder zumindest teilweise eine unterschiedliche Imprägnierung aufweisen.

Für andere Einsatzzwecke kann es vorteilhaft sein, wenn die Schaumstoffabschnitte des Fugendichtungsbandes zumindest teilweise einen unterschiedlichen Schaumstoff aufweisen. Es kann vorteilhaft sein, wenn in diesem Fall die den Schaumstoff aufweisenden Abschnitte zumindest teilweise eine gleiche oder eine unterschiedliche Höhe aufweisen. Auch kann es vorteilhaft sein, wenn die Schaumstoffabschnitte eine gleiche oder zumindest teilweise eine unterschiedliche Imprägnierung aufweisen.

Eine Unterteilung in verschiedene Abschnitte kann sich beispielsweise durch wenigstens eine im Schaumstoff vorhandene Trennschicht, beispielsweise in Form einer Klebstoff- oder Membranschicht, oder durch ein unterschiedliches Höhenprofil ergeben.

Es kann vorteilhaft sein, wenn mehrere Dichtbereiche innerhalb eines Fugendichtungsbandes vorgesehen sind.

Es kann vorteilhaft sein, wenn wenigstens zwei Schaumstoffabschnitte unterschiedliche Raumgewichte aufweisen.

Es kann vorteilhaft sein, wenn jeder Schaumstoffabschnitt einen Funktionsbereich aufweist, vorzugsweise einen ersten nach außen schlagregendichten Bereich, einen zweiten wärmedämmenden sowie schallmindernden Bereich und einen dritten nach innen luftdichten Bereich.

Es kann vorteilhaft sein, wenn der Schaumstoff ein überwiegend offenzelliger oder teilweise geschlossenzelliger oder offenzelliger Schaumstoff ist.

Es kann vorteilhaft sein, wenn wenigstens eine Membranschicht aus Klebstoff, vorzugsweise aus einem Acrylathaftklebstoff, aus einem Polyurethanklebstoff oder einem Gemisch aus Acrylathaftklebstoff und Polyurethanklebstoff gebildet ist.

Es kann vorteilhaft sein, wenn wenigstens eine Membranschicht aus einem Folienmaterial, vorzugsweise aus einer PE-, aus einer PA- oder einer PP-Folie gebildet ist.

Es kann vorteilhaft sein, wenn das Fugendichtungsband komprimierbar, vorzugsweise in Rollenform vorkomprimiert ist.

Es kann vorteilhaft sein, wenn das Fugendichtungsband vorzugsweise aufgrund der Imprägnierung verzögert rückstellfähig ist.

Es kann vorteilhaft sein, wenn die Dicke des Fugendichtungsbandes im nicht komprimierten Zustand zwischen 10 mm und 200 mm, vorzugsweise zwischen 10 mm bis 85 mm, beträgt.

Es kann vorteilhaft sein, wenn das Fugendichtungsband zur Abdichtung von Fugen zwischen zusammengefügten Bauelementen im Hausbau, insbesondere zwischen Wandöffnungen einer Außenwand und Fenster- oder Türrahmen, vorzugsweise ohne Zuhilfenahme zusätzlicher Fugenbändern oder Hinterfüllmaterialien, einsetzbar ist.

Es kann vorteilhaft sein, wenn das Fugendichtungsband zur Abdichtung von Fugen in einem Wärmedämmverbundsystem einsetzbar ist.

Es kann vorteilhaft sein, wenn das Fugendichtungsband zur Abdichtung von Fugen in einem an einer Vorwandmontagezarge einsetzbar ist.

Es kann von Vorteil sein, wenn das Fugendichtungsband einseitig selbstklebend ausgebildet ist. Die Seite kann vollflächig mit einer Selbstklebeschicht oder nicht vollflächig mit einer oder mehr als einer Selbstklebebahn beschichtet sein, welche vorzugsweise mit einem lösbaren Silikonpapier abgedeckt ist.

Es kann vorteilhaft sein, wenn der Fugendurchlasskoeffizient des Fugendichtungsbandes, bestimmt nach DIN 18542:2020, nicht imprägniert und/oder imprägniert a < 1 m³/[h m (daPa)"] beträgt.

Es kann vorteilhaft sein, wenn die Schlagregendichtheit des nicht imprägnierten Fugendichtungsbands, bestimmt nach DIN 18542:2020, < 600 Pa beträgt. Es kann vorteilhaft sein, wenn sich die Schlagregendichtheit des imprägnierten Fugendichtungsbandes durch eine Imprägniert erhöht und vorzugsweise bestimmt nach DIN 18542:2020 ≥ 600 Pa beträgt.

Es kann vorteilhaft sein, wenn das imprägnierte Fugendichtungsband eine Temperaturwechselbeständigkeit zwischen -20°C und + 80°C, bestimmt nach DIN 18542:2020 bei 100% rF, 85 °C, 20 h als Prüfbedingungen, aufweist.

Es kann vorteilhaft sein, wenn die Wärmeleitfähigkeit des Fugendichtungsbandes nicht imprägniert < 0,04 W/mK und imprägniert < 0,045 W/mK beträgt. Die Wärmeleitfähigkeit - ausgedrückt durch die Wärmeleitzahl (λ) in Watt pro Meter mal Kelvin (W/mK) beschreibt das Vermögen eines Materials, thermische Energie mittels Wärmeleitung zu transportieren. Die Wärmeleitfähigkeit wird gemäß DIN 18542:2020 bei einer Mitteltemperatur von 10 °C bestimmt, wobei das Fugendichtungsband um 50 % der ursprünglichen Höhe komprimiert ist. Es kann vorteilhaft sein, wenn das Verhältnis der Wärmeleitfähigkeiten des nicht imprägnierten zum imprägnierten Fugendichtungsband < 1:1 und/oder wobei die Differenz der vorgenannten Wärmeleitfähigkeiten vorzugsweise zwischen 0 und 0,01 W/mK liegt.

Es kann von Vorteil sein, wenn das imprägnierte Fugendichtungsband in seinem angegebenen Anwendungsbereich wenigstens einer der gängigen Brandnormen für den Baubereich entspricht, beispielsweise DIN 4102-B1 und/oder DIN 4102-B2 und/oder DIN EN 13501-1.

## Patentansprüche

1. Erzeugnis, vorzugsweise Fugendichtungsband, umfassend einen Schaumstoff oder Schaumstoffabschnitt, der zumindest teilweise mit einer Imprägniermasse imprägniert ist, **dadurch gekennzeichnet, dass** die Imprägniermasse eine oder mehr als eine Komponente aufweist, die eine Hydrophobierung des Schaumstoffs oder des Schaumstoffabschnitts bewirkt, wobei die Imprägniermasse keine per- und polyfluorierten Alkylverbindungen aufweist.

2. Erzeugnis nach Anspruch 1, **dadurch gekennzeichnet, dass** eine oder mehr als eine die Hydrophobierung bewirkende Komponente aus hydrophoben oder hydrophob modifizierten Mikropartikeln und/oder vorzugsweise aus hydrophoben oder hydrophob modifizierten Nanopartikeln besteht.

3. Erzeugnis nach zumindest einem der vorherigen Ansprüche, **dadurch gekennzeichnet, dass** eine oder mehr als eine die Hydrophobierung bewirkende Komponente in der Imprägniermasse emulgiert, dispergiert oder gelöst ist.

4. Erzeugnis nach zumindest einem der vorherigen Ansprüche, **dadurch gekennzeichnet, dass** eine oder mehr als eine die Hydrophobierung bewirkende Komponente ein hydrophobes oder hydrophob modifiziertes Siliconharz, insbesondere Methylpolysiloxan, ist.

5. Erzeugnis nach zumindest einem der vorherigen Ansprüche, **dadurch gekennzeichnet, dass** eine oder mehr als eine die Hydrophobierung bewirkende Komponente ein hydrophobes oder hydrophob modifiziertes Siloxan, insbesondere Polysiloxan, ist.

6. Erzeugnis nach zumindest einem der vorherigen Ansprüche, **dadurch gekennzeichnet, dass** eine oder mehr als eine die Hydrophobierung bewirkende Komponente eine hydrophobe oder hydrophob modifizierte Kieselsäure, insbesondere eine hydrophobe oder hydrophob modifizierte pyrogene Kieselsäure, ist.

7. Erzeugnis nach zumindest einem der vorherigen Ansprüche, **dadurch gekennzeichnet, dass** eine oder mehr als eine die Hydrophobierung bewirkende Komponente ein hydrophobes oder hydrophob modifiziertes Kieselgel ist.

8. Erzeugnis nach zumindest einem der vorherigen Ansprüche, **dadurch gekennzeichnet, dass** eine oder mehr als eine die Hydrophobierung bewirkende Komponente ein hydrophobes oder hydrophob modifiziertes Silikat, insbesondere Alkalisilikat, ist.

9. Erzeugnis nach zumindest einem der vorherigen Ansprüche, **dadurch gekennzeichnet, dass** eine oder mehr als eine die Hydrophobierung bewirkende Komponente ein hydrophob modifiziertes Metalloxid ist.

10. Erzeugnis nach zumindest einem der vorherigen Ansprüche, **dadurch gekennzeichnet, dass** eine oder mehr als eine die Hydrophobierung bewirkende Komponente ein hydrophobes oder hydrophob modifiziertes Silikonat, insbesondere ein Alkalimethylsilikonat oder vorzugsweise ein Alkalipropylsilikonat, ist.

11. Erzeugnis nach zumindest einem der vorherigen Ansprüche, **dadurch gekennzeichnet, dass** eine oder mehr als eine die Hydrophobierung bewirkende Komponente ein hydrophobes oder hydrophob modifiziertes Silan ist.

12. Erzeugnis nach zumindest einem der vorherigen Ansprüche, **dadurch gekennzeichnet, dass** eine oder mehr als eine die Hydrophobierung bewirkende Komponente ein hydrophobes oder hydrophob modifiziertes Polymer, vorzugsweise ein Acrylatpolymer, ist.

13. Erzeugnis nach zumindest einem der vorherigen Ansprüche, **dadurch gekennzeichnet, dass** eine oder mehr als eine die Hydrophobierung bewirkende Komponente aus Aerogel-Partikeln oder Kunststoffpartikeln besteht, wobei der Kunststoff Polyethylen, Polypropylen, Ethylenvinylacetat, Polyvinylacetat oder Polystyrol, insbesondere expandiertes Polystyrol, ist.

14. Erzeugnis nach zumindest einem der vorherigen Ansprüche, **dadurch gekennzeichnet, dass** eine oder mehr als eine die Hydrophobierung bewirkende Komponente Polypropylenglykol oder Polyethylenglykol ist.

15. Erzeugnis nach zumindest einem der vorherigen Ansprüche, **dadurch gekennzeichnet, dass** eine oder mehr als eine die Hydrophobierung bewirkende Komponente Asphalt, Bitumen, Teer, Pech, ein Paraffin oder ein Wachs ist.

16. Erzeugnis nach zumindest einem der vorherigen Ansprüche, **dadurch gekennzeichnet, dass** wenigstens eine Komponente der Imprägniermasse zumindest teilweise auf Basis wenigstens eines nachwachsenden Rohstoffs und/oder zumindest teilweise auf Basis wenigstens eines Rezyklats und/oder zumindest teilweise auf Basis eines zumindest teilweise aus CO₂ hergestellten Polyols produziert ist.
